# EUROPEAN PATENT APPLICATION

(11) **EP 2 172 664 A1**
(43) Date of publication of application: **07.04.2010**
(21) Application number: 08790647.5
(22) Date of filing: 26.06.2008
(51) Int. Cl.: F16C 33/52

(54) **PIN TYPE RETAINER, METHOD OF ASSEMBLING PIN TYPE RETAINER AND ROLLERS TOGETHER, AND ROLLER BEARING**

(30) Priority: 29.06.2007 JP 2007172461; 29.06.2007 JP 2007172469
(71) Applicant: JTEKT Corporation, Osaka-shi Osaka 542-8502 (JP)
(72) Inventor: MIYACHI, Takeshi, Osaka-shi Osaka 542-8502 (JP); KUBO, Junichi, Osaka-shi Osaka 542-8502 (JP); ADACHI, Takehiro, Osaka-shi Osaka 542-8502 (JP); KURASHITA, Yoshikazu, Osaka-shi Osaka 542-8502 (JP); SUZUKI, Nobuya, Osaka-shi Osaka 542-8502 (JP)
(74) Representative: HOFFMANN EITLE
(86) International application number: PCT/JP2008/061632
(87) International publication number: WO 2009/004976

(57) **Abstract**

Screw thread holes 20 circumferentially spaced from each other are formed in a first ring 10, and through holes 21 circumferentially spaced from each other are formed in a second ring 11. A screw thread section 40 and a press fitting section 42 are formed on the outer periphery of each pin 13. The minimum inner diameter of the through holes 21 in the second ring 11 is set greater than the maximum outer diameter of a portion of the pin 13 which is positioned closer to the screw thread section 40 than the press fitting section 42. The screw thread sections 40 of the pins 13 are screwed into the screw thread holes 20 in the first ring 10, and the press fitting sections 42 of the pins 13 are fixed in the through holes 21 in the second ring 11 by interference fit.

## Description

### TECHNICAL FIELD

The present invention relates to pin type retainers and, in particular, to a pin type retainer suitable for roller bearings to be used in aerogenerators or iron and steel manufacturing plants.

The invention also relates to a method of assembling a pin type retainer and rollers together as well as to a roller bearing having the pin type retainer.

### BACKGROUND ART

A pin type retainer of conventional use is described in JP S56-111318 U.

This pin type retainer includes a first ring, a second ring, and a plurality of rod-like pins for coupling the first ring and the second ring to each other, where the plurality of pins are spaced from each other in a circumferential direction of the first ring.

One end portion of the pin is fixed to the first ring, while the other end portion of the pin is inserted into a conical-shaped through hole formed in the second ring. Between an inner circumferential surface of the conical-shaped through hole and an outer circumferential surface of the other end portion of the pin, an annular-shaped bushing having a conical surface-shaped outer circumferential surface is press-fitted, and thereafter a forward end of the other end portion of the pin and the second ring are welded together, by which the pin is fixed to the second ring.

In the above-described conventional pin type retainer, since the bushing is press-fitted into between the inner circumferential surface of the conical-shaped through hole and the outer circumferential surface of the other end portion of the pin, impacts or loads are not concentrated to the welded portion so that the welded portion can be prevented from being damaged advantageously, while the need for press-fitting of the bushing causes the assembling workability of the pin type retainer to be poor, leading to lower mass productivity.

Meanwhile, when the bushing is omitted so that a forward end of the other end portion of the pin and the second ring are directly welded together with a view to improving the assembling workability of the pin type retainer, peripheries of the other end portion of the pin become lower in rigidity, while impacts or loads are concentrated on the welded portions, with the result that damage of the welded portions occur frequently.

### SUMMARY OF INVENTION

### Technical Problem

Accordingly, an object of the present invention is to provide a pin type retainer which is good at assembling workability, high in mass productivity, and high in rigidity, as well as a roller bearing having such a pin type retainer.

Also, another object of the invention is to provide a method of assembling a pin type retainer and rollers together, which makes it possible to assemble a pin type retainer involving smaller man-hours, excellent in workability and mass productivity, and high in rigidity.

### Solution to Problem

In order to achieve the above object, there is provided a pin type retainer comprising:
a first ring;
a second ring which is positioned at a distance from the first ring in an axial direction of the first ring and which has a plurality of through holes circumferentially spaced from each other; and
a rod-like pin which is inserted into a through hole of a roller and which has a press fitting section and a screw thread section on its outer circumferential surface, wherein
an outer diameter of the press fitting section of the pin is larger than a maximum outer diameter of a portion of the pin on the screw thread section side with respect to the press fitting section,
a minimum inner diameter of the through hole of the second ring is larger than the maximum outer diameter of the portion of the pin on the screw thread section side with respect to the press fitting section,
the screw thread section of the pin is screwed and fixed to the first ring while the press fitting section of the pin is interference-fit to the through hole of the second ring, and
the retainer includes an anti-loosening portion for preventing the press fitting section of the pin from loosening out from the through hole of the second ring.

According to this invention, since the press fitting section of the pin is interference-fitted to the through hole of the second ring, impacts or loads can be received by the whole outer circumferential surface of the press fitting section, so that the junction portion of the pin and the second ring can be increased in rigidity. Therefore, the rigidity of the pin type retainer against loads acting on the pins can be increased.

In one embodiment of the invention, the first ring has a plurality of screw thread holes spaced from each other in a circumferential direction of the first ring, and
the screw thread section of the pin is screwed with the screw thread hole of the first ring.

According to this embodiment, the press fitting section of the pin is interference-fitted to the through hole of the second ring, other than the construction in which a bushing is press-fitted to between the outer circumferential surface of the pin and the through hole of the second ring. Thus, the parts count can be reduced, so that the manufacturing cost can be reduced.

Further, according to this embodiment, for example, only by rotating the pin with a tool or the like, the screw thread section can be screwed into the screw thread hole, while the press fitting section can be press-fitted into the through hole. Accordingly, as compared with a construction in which a bushing is press-fitted between the outer circumferential surface of the pin and the through hole of the second ring, the workability can be improved to a great extent, and moreover the production cycle time can be shortened, so that the mass-productivity can be improved.

In one embodiment of the invention, the first ring has a plurality of through holes spaced from each other in the circumferential direction of the first ring,
the outer circumferential surface of the pin has a fitting section between the press fitting section and the screw thread section,
the pin type retainer further comprises nuts which are to be in contact with an axial end face of the first ring on one side opposite to a second ring side and which have screw thread holes communicating with the through holes of the first ring, and
the fitting section of the pin is clearance-fitted to the through hole of the first ring, while the screw thread section of the pin is screwed into the screw thread hole of the nut.

According to this embodiment, only by rotating the nut, the screw thread section can be screwed into the screw thread hole, while the press fitting section can be press-fitted into the through hole. Accordingly, as compared with a construction in which a bushing is press-fitted between the outer circumferential surface of the pin and the through hole of the second ring, the workability can be improved to a great extent, and moreover the production cycle time can be shortened, so that the mass-productivity can be improved.

Further, according to this embodiment, since rotating the nut causes the pin to be moved from the second ring toward the first ring, the pin can be moved from the second ring toward the first ring without being rotated. Therefore, when the press fitting section is press-fitted into the inner circumferential surface of the through hole of the second ring, there is no occurrence of dynamical friction due to rotation of the pin. As a consequence, compared with the construction in which the pin is rotated with a torque applied to the pin and thereby the pin is moved from the second ring toward the first ring, interferences or tightening margins between the outer circumferential surface of the press fitting section and the inner circumferential surface of the through hole of the second ring, can be larger. Therefore, the rigidity in the junction portion of the pin and the second ring can be further increased, so that the rigidity of the pin type retainer against loads acting on the pins can be further increased.

In one embodiment of the invention, the pin has a stepped portion on one side of the fitting section opposite to the screw thread section side, and
the stepped portion of the pin is in contact with the second ring-side axial end face of the first ring.

According to this embodiment, the pin can be fixed securely to the first ring.

Also, there is provided a method of assembling a pin type retainer and rollers together, the method comprising the steps of: preparing
a first ring,
a second ring having through holes,
rollers having through holes, and
a rod-like pin which has a screw thread section and a press fitting section on its outer circumferential surface, wherein an outer diameter of the press fitting section is larger than a minimum inner diameter of the through holes of the second ring while a maximum outer diameter of a portion of the pin on the screw thread section side with respect to press fitting section is smaller than the minimum inner diameter of the through holes of the second ring; and
inserting a screw thread section-side end portion of the pin through the through hole of the second ring and thereafter through the through hole of the roller,
subsequently, while a relative position of the second ring to the first ring is maintained at a preset relative position, fixing the screw thread section of the pin to the first ring by screwing, and moreover press-fitting the press fitting section into the through hole of the second ring.

According to this invention, in the pin type retainer to be manufactured, since the press fitting section of the pin is interference-fitted to the through hole of the second ring, impacts or loads can be received by the whole outer circumferential surface of the press fitting section, so that the junction portion of the pin and the second ring can be increased in rigidity. Therefore, the rigidity of the pin type retainer against loads acting on the pins can be increased.

In one embodiment of the invention,
the first ring has screw thread holes,
the pin has a torque applying portion on one side of the press fitting section opposite to the screw thread section side,
the screw thread section-side end portion of the pin is inserted through the through hole of the second ring and thereafter through the through hole of the roller, and subsequently the screw thread section-side end of the pin is inserted into an opening of the screw thread hole of the first ring, and
subsequently, while a relative position of the second ring to the first ring is maintained at a preset relative position, a torque is applied to the torque applying portion to make the pin rotated, by which the screw thread section is screwed to the screw thread hole, and moreover the press fitting section is press-fitted into the through hole.

According to this embodiment, only by rotating the pin with a torque applied to the torque applying portion, the screw thread section can be screwed into the screw thread hole, while the press fitting section can be press-fitted into the through hole. Accordingly, as compared with a method in which a bushing is press-fitted between the outer circumferential surface of the pin and the through hole of the second ring, the workability can be improved to a great extent, and moreover the production cycle time can be shortened, so that the mass-productivity can be improved.

Further, according to this embodiment, since the prepared pin has the torque applying portion, a large torque can be applied to the pin so that large axial propulsive power for the pin (a power for the pin to move in the axial direction) can be generated due to the screw thread section being screwed into the screw thread hole, allowing the press fitting section to be press-fitted into the through hole with this large propulsive power. Thus, since interferences or tightening margins between the second ring and the pin can be larger so that the pin can be fixed firmly to the second ring, there can be manufactured a pin type retainer of high rigidity.

In one embodiment of the invention,
the first ring has through holes;
the pin has a fitting section between the screw thread section and the press fitting section,
a maximum outer diameter of a portion of the pin ranging from a press fitting section-side end of the fitting section to the screw thread section is smaller than a minimum inner diameter of the through holes of the first ring, and
the method further comprises:
preparing nuts having screw thread holes;
inserting a screw thread section-side end portion of the pin through the through hole of the second ring, then through the through hole of the roller, and thereafter through the through hole of the first ring, and subsequently inserting the screw thread section-side end of the pin into an opening of the screw thread hole of the nut; and
thereafter, while a relative position of the second ring to the first ring is maintained at a preset relative position, rotating the nut so that the pin is moved from the second ring toward the first ring, by which the screw thread section of the pin is screwed with the screw thread hole of the nut and moreover the press fitting section of the pin is press-fitted into the through hole of the second ring.

According to this embodiment, only by rotating the nut, the screw thread section can be screwed into the screw thread hole, while the press fitting section can be press-fitted into the through hole. Accordingly, as compared with a method in which a bushing is press-fitted between the outer circumferential surface of the pin and the through hole of the second ring, the workability can be improved to a great extent, and moreover the production cycle time of the pin type retainer can be shortened, so that the mass-productivity can be improved.

Further, according to this embodiment, by virtue of its construction in which the nut is to be rotated, the pin, without being rotated itself, can be moved from the second ring toward the first ring. Therefore, when the press fitting section is press-fitted into the inner circumferential surface of the through hole of the second ring, there is no occurrence of dynamical friction due to rotation of the pin. Thus, compared with the construction in which the pin is rotated with a torque applied thereto and thereby the pin is moved from the second ring toward the first ring, interferences or tightening margins between the outer circumferential surface of the press fitting section and the inner circumferential surface of the through hole of the second ring, can be larger. Therefore, the rigidity in the junction portion of the pin and the second ring can be further increased, so that a pin type retainer of large rigidity can be assembled with simplicity.

In one embodiment of the invention, there is provided a roller bearing comprising:
an outer ring;
an inner ring;
a plurality of rollers positioned between the outer ring and the inner ring; and
the pin type retainer for retaining the plurality of rollers.

According to this invention, the assembling workability of the pin type retainer can be improved, so that its mass-productivity can be enhanced. Further, high rigidity can be ensured in the pin type retainer.

### Advantageous Effects of Invention

According to the pin type retainer of the invention, the assembling workability can be improved, so that its mass-productivity can be enhanced. Further, high rigidity can be ensured.

Also, according to the method of assembling a pin type retainer and rollers together in this invention, the workability and mass-productivity can be improved. Further, a pin type retainer of large rigidity can be assembled with simplicity.

### BRIEF DESCRIPTION OF DRAWINGS

The present invention will become more fully understood from the detailed description given hereinbelow and the accompanying drawings which are given by way of illustration only, and thus are not intended to limit the present invention, and wherein:
Fig. 1 is a perspective view showing a whole image of a tapered roller bearing according to a first embodiment of the roller bearing of the present invention;
Fig. 2 is a perspective view of one part of the retainer showing in detail a structure of the retainer of the first embodiment;
Fig. 3 is a perspective view showing a whole image of a tapered roller bearing according to a second embodiment of the roller bearing of the present invention; and
Fig. 4 is a perspective view of one part of the retainer showing in detail a structure of the retainer of the second embodiment.

### DESCRIPTION OF EMBODIMENTS

Hereinbelow, the present invention will be described in detail by embodiments thereof illustrated in the accompanying drawings.

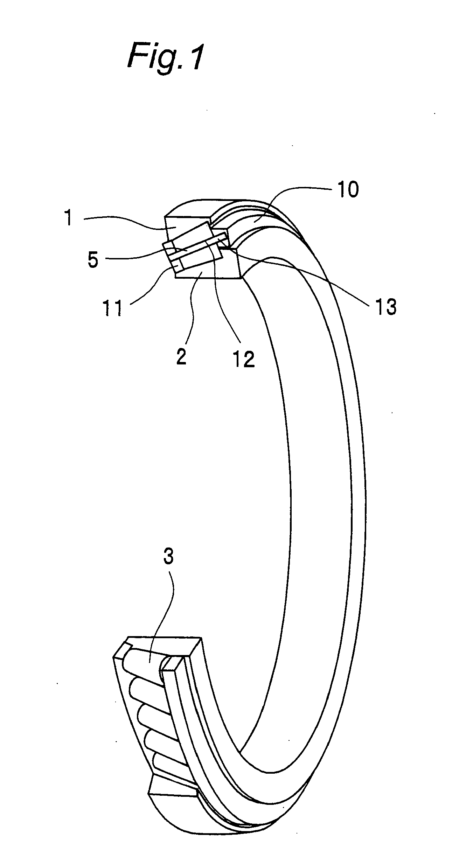

Fig. 1 is a perspective view showing a whole image of a tapered roller bearing according to a first embodiment of the roller bearing of the present invention In Fig. 1, for clear illustration of the structure, the tapered roller bearing is partly removed to show an axial cross section of the tapered roller bearing.

This tapered roller bearing includes an outer ring 1, an inner ring 2, a plurality of tapered rollers 3 as rolling elements, and a pin type retainer 5 (hereinafter, referred to merely as retainer) according to the first embodiment of the invention.

The outer ring 1 has an inner-circumferential conical surface, while the inner ring 2 has an outer-circumferential conical surface. Also, the plurality of tapered rollers 3, while held by the retainer 5 between the inner-circumferential conical surface of the outer ring 1 and the outer-circumferential conical surface of the inner ring 2, are circumferentially spaced from each other.

The retainer 5 has a first ring 10, a second ring 11 and a plurality of rod-like pins 13, where the plurality of pins 13 are spaced from each other in the circumferential direction of the first ring 10. The first ring 10 is positioned with a distance to the second ring 11 in an axial direction. A center axis of the first ring 10 is positioned roughly on an extension line of a center axis of the second ring 11. An inner diameter of the inner circumferential surface of the first ring 10 is larger than an inner diameter of the inner circumferential surface of the second ring 11.

Each of the tapered rollers 3 has a through hole 12 extending roughly on a center axis of the tapered roller 3. The pin 13 is inserted through the through hole 12 of the tapered roller 3, where one end portion of the pin 13 is fixed to the first ring 10 while the other end portion of the pin 13 is fixed to the second ring 11. Thus, the retainer 5 and the plurality of pins 13 are integrated together. A circumferential distance between circumferentially neighboring two pins 13 is set to such a distance that the circumferentially neighboring tapered rollers 3 are kept away from contact with each other.

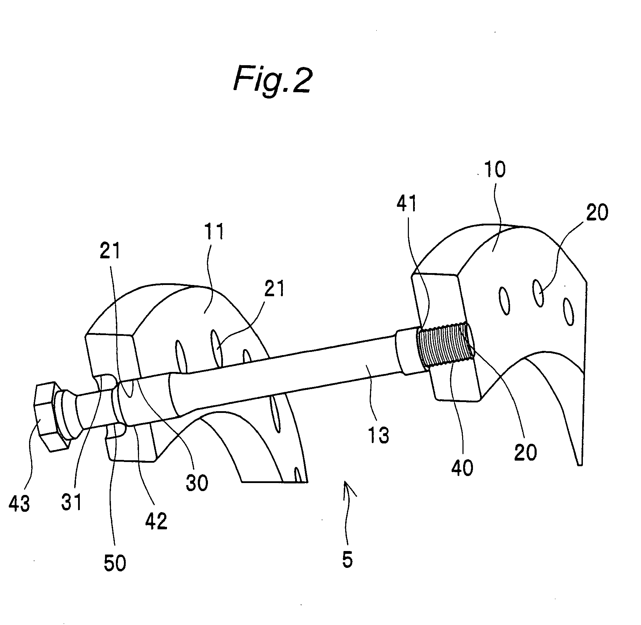

Fig. 2 is a perspective view of one part of the retainer showing in detail a structure of the retainer 5 of the first embodiment.

As shown in Fig. 2, the first ring 10 has a plurality of screw thread holes 20, and the plurality of screw thread holes 20 are spaced from each other in the circumferential direction of the first ring 10. Meanwhile, the second ring 11 has a plurality of through holes 21, and the plurality of through holes 21 are spaced from each other in the circumferential direction of the second ring 11. Each of the through holes 21 has a first cylindrical surface portion 30, and a second cylindrical surface portion 31. The first cylindrical surface portion 30 is positioned on one side of the through hole 21 closer to the first ring 10, and the second cylindrical surface portion 31 adjoins an end of the first cylindrical surface portion 30 on one side opposite to the first ring 10 side. An inner diameter of the first cylindrical surface portion 30 is smaller than an inner diameter of the second cylindrical surface portion 31. The first cylindrical surface portion 30 is opened in a first ring 10-side end face of the second ring 11, while the second cylindrical surface portion 31 is opened in the opposite-side end face of the second ring 11 opposite to the first ring 10 side.

Each of the pins 13 has a screw thread section 40, a contact section 41, a press fitting section 42 and a torque applying portion 43.

The screw thread section 40, which is formed on an outer circumferential surface of one end portion of the pin 13, has a configuration matching the screw thread hole 20 of the first ring 10. The contact section 41 adjoins the screw thread section 40. The contact section 41, being a stepped portion, has an outer diameter larger than an outer diameter of the screw thread section 40. The contact section 41 is in contact with a second ring 11-side end face of the first ring 10. A pressure introduced between the contact section 41 and the second ring 11-side end face of the first ring 10 is a specified pressure or more. The screw thread section 40 is screwed with the screw thread hole 20.

The press fitting section 42 adjoins the contact section 41 via a roughly columnar portion. The press fitting section 42 is positioned on one side of the contact section 41 opposite to the screw thread section 40. While the pin 13 is out of contact with the second ring 11 (i.e., the pin 13 is unfixed to the second ring 11), the outer diameter of the press fitting section 42 is larger than the inner diameter of the first cylindrical surface portion 30. The press fitting section 42 is fixed to the first cylindrical surface portion 30 by interference fit. The torque applying portion 43 is positioned at the other end portion of the pin 13, being positioned on one side of the press fitting section 42 opposite to the contact section 41 side. The torque applying portion 43 is formed of a disc plate (regular hexagonal cylinder) having a regular hexagonal cross section. The circumscribed circle diameter of the regular hexagon is a maximum of circumscribed circle diameters of the pin 13. The outer diameter of the press fitting section 42 of the pin 13 is larger than the maximum outer diameter in a portion of the pin 13 on the screw thread section 40 side with respect to the press fitting section 42. The maximum outer diameter in the portion of the pin 13 on the screw thread section 40 side with respect to press fitting section 42 is smaller than the inner diameter of the first cylindrical surface portion 30 of the second ring 11.

The torque applying portion 43 is adapted to fitting of a wrench. Torque is applied to the torque applying portion 43 by a wrench, so that the pin 13 is rotated, thus allowing the screw thread section 40 to be screwed into the screw thread hole 20.

Although not shown, this retainer 5 includes a welded portion as an anti-loosening portion. The welded portion is placed between an inner circumferential surface of the second cylindrical surface portion 31 and an outer circumferential surface of a portion 50 of the pin 13 on the other end portion side with respect to the press fitting section 42. The welded portion serves a role of preventing loosening of the press fitting section 42 from the first cylindrical surface portion 30, as well as a role of increasing the rigidity of a junction portion between the pin 13 and the second ring 11.

Fig. 1 shows a state in which the retainer 5 and the tapered rollers 3 are assembled together. Hereinbelow, a method of assembling the retainer and rollers according to the first embodiment of the invention is explained with reference mainly to Fig. 2.

First, tapered rollers each having a through hole, and the members shown in Fig. 2, are prepared. In more detail, referring to Fig. 2, tapered rollers each having a through hole, a first ring 10 having screw thread holes 20, a second ring 11 having through holes 21, and rod-like pins 13 are prepared. As shown in Fig. 2, each of the pin 13 has a screw thread section 40 and a press fitting section 42 on its outer circumferential surface and moreover has a torque applying portion 43 on one side of the press fitting section 42 opposite to the screw thread section 40 side. With the press fitting section 42 not inserted into the through hole 21, a minimum inner diameter of the through hole 21 of the second ring 11 (inner diameter of the first cylindrical surface portion 30) is smaller than the outer diameter of the press fitting section 42, while the inner diameter of the first cylindrical surface portion 30 is larger than the maximum outer diameter of the portion of the pin 13 on the screw thread section 40 side with respect to the press fitting section 42.

Next, with jigs or the like, the first ring 10 and the second ring 11 are fixed at preset positions, by which a relative position of the second ring 11 to the first ring 10 is brought to a preset one. Thereafter, with the relative position of the second ring 11 to the first ring 10 maintained in the preset relative position, a screw thread section 40-side end portion of the pin 13 is inserted through the through hole 21 of the second ring 11, and thereafter inserted through the through hole 12 of the tapered roller 3 (see Fig. 1). Subsequent to this, the screw thread section 40-side end of the pin 13 is inserted into an opening of the screw thread hole 20 of the first ring 10.

Thereafter, while a wrench (not shown) is engaged with the regular hexagonal cylinder-shaped torque applying portion 43, a torque is given to the wrench, so that the torque applying portion 43 is rotated, making the pin 13 rotated. In this way, the screw thread section 40 is screwed into the screw thread hole 20, while the press fitting section 42 is press-fitted into the through hole 21 by the axial force (propulsive power) of the pin 13.

Finally, a molten metal material is injected to between the inner circumferential surface of the second cylindrical surface portion 31 of the through hole 21 of the second ring 11 and the outer circumferential surface of the portion 50 of the pin 13 on the other end portion side with respect to the press fitting section 42, followed by cooling process. Thus, a welded portion (not shown) as an example of the anti-loosening portion is formed, where the assembling of the retainer 5 and the tapered rollers 3 is completed.

According to the retainer 5 of the first embodiment, since the press fitting section 42 of the pin 13 is interference-fitted to the through hole 21 of the second ring 11, impacts or loads can be received by the whole outer circumferential surface of the press fitting section 42, thus allowing the retainer 5 to be increased in rigidity.

Further, according to the retainer 5 of the first embodiment, the press fitting section 42 of the pin 13 is interference-fitted to the through hole 21 of the second ring 11, other than the construction in which a bushing is press-fitted to between the outer circumferential surface of the pin and the through hole of the second ring. Thus, the parts count can be reduced, so that the manufacturing cost can be reduced.

Further, according to the retainer 5 of the first embodiment, for example, only by rotating the pin 13 with a tool or the like, the screw thread section 40 can be screwed into the screw thread hole 20, while the press fitting section 42 can be press-fitted into the through hole 21. Accordingly, as compared with a construction in which a bushing is press-fitted between the outer circumferential surface of the pin and the through hole of the second ring, the workability can be improved to a great extent, and moreover the production cycle time can be shortened, so that the mass-productivity can be improved.

According to the retainer 5 of the first embodiment, the pin 13 has the contact section 41.
Therefore, compared with cases in which recess or cutout is formed in the pin to stop the pin from moving in the axial direction of the pin, applying even large torque to the torque applying portion 43 causes no damage of the pin 13, while the screw thread section 40 can be tightened to the screw thread hole 20 with large torque, so that the engagement portion between the pin 13 and the first ring 10 can be increased in rigidity.

Further, according to the retainer and roller assembling method of the first embodiment, torque is applied to the torque applying portion 43 to make the pin 13 rotated, merely by which the screw thread section 40 can be screwed into the screw thread hole 20 while the press fitting section 42 can be press-fitted into the through hole 21. Therefore, compared with a method including the step of press-fitting a bushing between the outer circumferential surface of the pin and the through hole of the second ring, the workability can be improved to a great extent, while the cycle time of production can be shortened, making it possible to improve the mass-productivity.

Also, according to the retainer and roller assembling method of the first embodiment, since the prepared pin 13 has the torque applying portion 43, the pin 13 can be given a large torque, so that large axial propulsive power for the pin 13 (a power for the pin 13 to move in the axial direction) can be generated due to the screw thread section 40 being screwed into the screw thread hole 20, allowing the press fitting section 42 to be press-fitted into the through hole 21 with this large propulsive power. Thus, since the pin 13 can be fixed firmly to the second ring 11, there can be manufactured a retainer 5 excellent in rigidity.
Therefore, compared with a method including the step of press-fitting a bushing between the outer circumferential surface of the pin and the through hole of the second ring, the workability can be improved to a great extent, while the cycle time of production can be shortened, making it possible to improve the mass-productivity.

Also, according to the tapered roller bearing of the first embodiment, the assembling workability of the retainer 5 can be improved, so that its mass-productivity can be enhanced. Further, high rigidity can be ensured in the retainer 5.

In the above-described retainer 5 of the first embodiment, the torque applying portion 43 is a disc plate having a hexagonal-shaped cross section and formed at the other end portion of the pin 13. However, for the retainer of this invention, the torque applying portion may also be a tool insertion hole (e.g., a hexagonal hole (hexagonal wrench insertion hole) having a regular hexagonal-shaped cross section, etc.) formed in an end face of the other end portion of the pin.

Also, although the pin 13 has the torque applying portion 43 in the retainer 5 of the first embodiment, it is also possible that the pin has no torque applying portion in the retainer of this invention. As to the reason of this, the torque applying portion is needed to give large torque to the pin so that the screw thread section is screwed into the screw thread hole, i.e., that the pin is rotated, meaning that the torque applying portion is not an indispensable component for the final product. Accordingly, the press fitting section may be cut off after being press-fitted into the first cylindrical surface portion. It is needless to say that cutting the torque applying portion allows the retainer to be reduced in its axial size.

Also, although the anti-loosening portion is a welded portion in the retainer 5 of the first embodiment, it is also possible, for the retainer of the invention, that the anti-loosening portion is one portion of the pin on the other end portion side with respect to the press fitting section, which is deformed by crimping or that the anti-loosening portion may be a rod member (e.g., a small pin) struck in on the other end portion side with respect to the press fitting section.

Although the pin 13 has the contact section 41 in the retainer 5 of the first embodiment, recess or cutout may also be formed instead of the contact section formed in the pin in this invention.

Also, in the retainer 5 of the first embodiment, the through holes 21 of the second ring 11 each have the first cylindrical surface portion 30 and the second cylindrical surface portion 31 larger in inner diameter than the first cylindrical surface portion 30. However, the second cylindrical surface portion may be unprovided, and the through holes may be all of the same inner diameter.

Also, in the retainer 5 of the first embodiment, the press fitting section 42 and the screw thread section 40 are coupled with each other via a roughly columnar-shaped portion as shown in Fig. 2. However, the configuration of the portion between the press fitting section and the screw thread section is not limited to a columnar one. The portion positioned between the press fitting section and the screw thread section may be formed into any configuration only if the portion, which is positioned within a region defined by an extension plane of the outer circumferential surface of the press fitting section, does not make contact with the through holes of the second ring during its passage through the through holes of the second ring. In addition, needless to say, the screw thread section is also positioned within the region defined by the extension plane of the outer circumferential surface of the press fitting section. The reason of this is that if a portion of the pin positioned closer to the screw thread section than the press fitting section is not positioned within the region defined by the extension plane of the outer circumferential surface of the press fitting section, then the portion of the pin positioned closer to the screw thread section than the press fitting section cannot pass through the first cylindrical surface portion without making contact with the first cylindrical surface portion.

Further, although the rolling elements of the roller bearing are tapered rollers in the first embodiment, yet the rolling elements for the roller bearing in this invention may also be cylindrical rollers or spherical rollers. Besides, although the tapered rollers 3 are retained by the retainer 5 of the first embodiment, the retainer of this invention may also be used to retain cylindrical rollers or spherical rollers.

Furthermore, although the cutting of the torque applying portion 43 is not included in the retainer and roller assembling method of the first embodiment, it is also possible to do the cutting of the torque applying portion in the retainer and roller assembling method of this invention. In this case, the cutting of the torque applying portion may be done after the press fitting section of the pin is press-fitted into the through hole of the second ring and moreover before the welding is done.

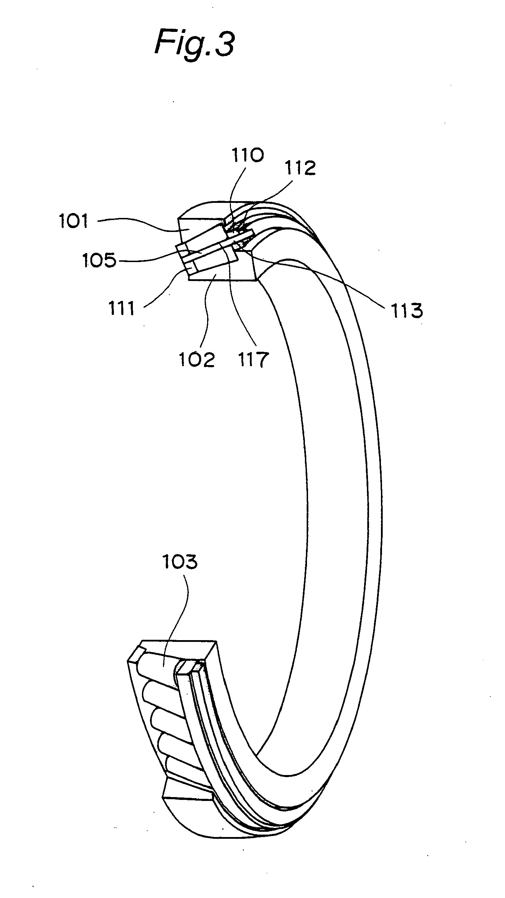

Fig. 3 is a perspective view showing a whole image of a tapered roller bearing according to a second embodiment of the roller bearing of the present invention. In Fig. 3, for clear illustration of the structure, the tapered roller bearing is partly removed to show an axial cross section of the tapered roller bearing.

This tapered roller bearing includes an outer ring 101, an inner ring 102, a plurality of tapered rollers 103 as rolling elements, and a pin type retainer 105 (hereinafter, referred to merely as retainer) according to the second embodiment of the invention.

The outer ring 101 has an inner-circumferential conical surface, while the inner ring 102 has an outer-circumferential conical surface. Also, the plurality of tapered rollers 103, while held by the retainer 105 between the inner-circumferential conical surface of the outer ring 101 and the outer-circumferential conical surface of the inner ring 102, are circumferentially spaced from each other.

The retainer 105 has a first ring 110, a second ring 111, nut 112 and a plurality of rod-like pins 113, where the plurality of pins 113 are spaced from each other in the circumferential direction of the first ring 110. The first ring 110 is positioned with a distance to the second ring 111 in an axial direction. A center axis of the first ring 110 is positioned roughly on an extension line of a center axis of the second ring 111. An inner diameter of the inner circumferential surface of the first ring 110 is larger than an inner diameter of the inner circumferential surface of the second ring 111. The nut 112 is in contact with an end face of the first ring 110 opposite to the second ring 111 side.

Each of the tapered rollers 103 has a through hole extending roughly on a center axis of the tapered rollers 103. Into the through hole of each tapered roller 103, the pin 113 is inserted so that the pin 113 passes through the first ring 110 and the second ring 111. One end portion of the pin 113 on one side opposite to the second ring 111 side of the first ring 110 is fixed to the nut 112. Meanwhile, the other end portion of the pin 113 is fixed to the second ring 111. Thus, the retainer 105 and the plurality of tapered rollers 103 are integrated together. A circumferential distance between circumferentially neighboring two pins 113 is set to such a distance that circumferentially neighboring tapered rollers 103 do not make contact with each other.

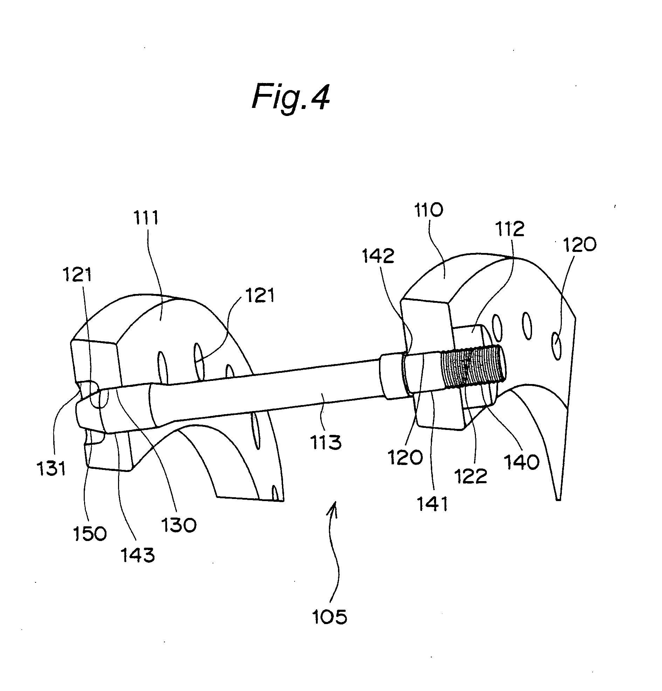

Fig. 4 is a perspective view of one part of the retainer showing in detail a structure of the retainer 105 of the second embodiment.

As shown in Fig. 4, the first ring 110 has a plurality of through holes 120, and the plurality of through holes 120 are spaced from each other in the circumferential direction of the first ring 110.
Meanwhile, the second ring 111 has a plurality of through holes 121, and the plurality of through holes 121 are spaced from each other in the circumferential direction of the second ring 111. Each of the through holes 121 has a first cylindrical surface portion 130, and a second cylindrical surface portion 131. The first cylindrical surface portion 130 is positioned on one side of the through hole 121 closer to the first ring 110, and the second cylindrical surface portion 131 adjoins an end of the first cylindrical surface portion 130 on one side opposite to the first ring 110 side. An inner diameter of the first cylindrical surface portion 130 is smaller than an inner diameter of the second cylindrical surface portion 131. The first cylindrical surface portion 130 is opened in a first ring 110-side end face of the second ring 111, while the second cylindrical surface portion 131 is opened in the opposite-side end face of the second ring 111 opposite to the first ring 110 side.

The nut 112 is provided by a count equal to that of the through holes 120 of the first ring 110. The nuts 112 are in contact with an end face of the first ring 110 opposite to the second ring 111 side end face as described above. The nuts 112 each have a screw thread hole 122. The screw thread hole 122 of each nut 112 is communicated with the through hole 120 of the first ring 110.

Each of the pins 113 has a screw thread section 140, a fitting section 141, a contact section 142 and a press fitting section 143.

The screw thread section 140 is formed in an outer circumferential surface of one end portion of the pin 113 so as to have a configuration matching the screw thread hole 122 of the nut 112. The screw thread section 140 of the pin 113 is screwed with the screw thread hole 122 of the nut 112. The fitting section 141 adjoins the screw thread section 140. The fitting section 141 is clearance-fitted to the through hole 120 of the first ring 110. The contact section 142 adjoins one side of the fitting section 141 opposite to its screw thread section 140 side. The contact section 142 is a stepped portion, and an outer diameter of the contact section 142 is larger than the outer diameter of the fitting section 141. The contact section 142 is in contact with a second ring 111-side end face of the first ring 110. A pressure introduced between the contact section 142 and the second ring 111-side end face of the first ring 110 is a specified pressure or more.

The press fitting section 143 adjoins the contact section 142 via a roughly columnar portion. The press fitting section 143 is positioned on one side of the contact section 142 opposite to the fitting section 141. While the pin 113 is out of contact with the second ring 111 (i.e., the pin 13 is unfixed to the second ring 11), the outer diameter of the press fitting section 143 is larger than the inner diameter of the first cylindrical surface portion 130. The press fitting section 143 is fixed to the first cylindrical surface portion 130 by interference fit.

Although not shown, this retainer 105 includes a welded portion as an anti-loosening portion. The welded portion is placed between an inner circumferential surface of the second cylindrical surface portion 131 and an outer circumferential surface of a portion 150 (a portion of the pin 113 on one side of the press fitting section 143 opposite to the fitting section 141 side) of the pin 113 on the other end portion side with respect to the press fitting section 143. The welded portion serves a role of preventing loosening of the press fitting section 143 from the first cylindrical surface portion 130, as well as a role of increasing the rigidity of a junction portion between the pin 113 and the second ring 111.

Fig. 3 shows a state in which the retainer 105 and the tapered rollers 103 are assembled together. Hereinbelow, a method of assembling the retainer and rollers according to the second embodiment of the invention is explained with reference mainly to Fig. 4.

First, tapered rollers 103 each having a through hole 117 (see Fig. 3), and the members shown in Fig. 4, are prepared. In more detail, referring to Fig. 4, tapered rollers 103 each having a through hole 117, a first ring 110 having through holes 120, a second ring 111 having through holes 121, nuts 112 each having a screw thread hole 122, and a rod-like pin 113 are prepared.

As shown in Fig. 4, the pin 113 has a screw thread section 140, a fitting section 141 and a press fitting section 143 on its outer circumferential surface. An outer diameter of the press fitting section 143 of the pin 113 is larger than a maximum outer diameter of the portion of the pin 113 on the screw thread section 140 side with respect to the press fitting section 143. With the press fitting section 143 not inserted into the through hole 121, a minimum inner diameter of the through hole 121 of the second ring 111 (inner diameter of the first cylindrical surface portion 130) is smaller than the outer diameter of the press fitting section 143, while the inner diameter of the first cylindrical surface portion 130 is larger than a maximum outer diameter of the portion of the pin 113 on the screw thread section 140 side with respect to the press fitting section 143. Also, the minimum inner diameter of the through hole 120 of the first ring 110 is larger than the maximum outer diameter of the portion of the pin 113 on the screw thread section 140 side with respect to the contact portion 142.

Next, with jigs or the like, the first ring 110 and the second ring 111 are fixed at preset positions, by which a relative position of the second ring 111 to the first ring 110 is brought to a preset one. Thereafter, with the relative position of the second ring 111 to the first ring 110 maintained in the preset relative position, a screw thread section 140-side end portion of the pin 113 is inserted through the through hole 121 of the second ring 111, and thereafter inserted through the through hole 117 of the tapered roller 103 (see Fig. 3) and subsequently passed through the through hole 120 of the first ring 110. After that, the screw thread section 140-side end of the pin 113 is inserted into an opening of the screw thread hole 122 of the nut 112.

Thereafter, a torque is applied to the nuts 112 so that the nut 112 is rotated, making the pin 113 moved in the axial direction of the pin 113 without being rotated. In this way, the screw thread section 140 of the pin 113 is screwed into the screw thread hole 122 of the nut 112, while the press fitting section 143 is press-fitted into the through hole 121 by the axial force (propulsive power) of the pin 113.

Finally, a molten metal material is injected to between the inner circumferential surface of the second cylindrical surface portion 131 of the through hole 121 of the second ring 111 and the outer circumferential surface of the portion 150 of the pin 113 on the other end portion side with respect to the press fitting section 143, followed by cooling process. Thus, a welded portion (not shown) as an example of the anti-loosening portion is formed, where the assembling of the retainer 105 and the tapered rollers 103 is completed.

According to the retainer 105 of the second embodiment, since the press fitting section 143 of the pin 113 is interference-fitted to the through hole 121 of the second ring 111, impacts or loads can be received by the whole outer circumferential surface of the press fitting section 143, thus increasing the rigidity of the junction portion between the pin 113 and the second ring 111. Accordingly, the retainer 105 can be increased in rigidity against loads acting on its pins.

Further, according to the retainer 105 of the second embodiment, only by rotating the nut 112, the screw thread section 140 of the pin 113 can be screwed into the screw thread hole 122 of the nut 112 while the press fitting section 143 can be press-fitted into the through hole 121 of the second ring 111. Therefore, compared with the construction in which the bushing is press-fitted between the outer circumferential surface of the pin and the through hole of the second ring, the workability can be improved to a great extent, while the cycle time of production can be shortened, making it possible to improve the mass-productivity.

Further, according to the retainer 105 of the second embodiment, since rotating the nut 112 causes the pin 113 to be moved in a direction from the second ring 111 toward the first ring 110, the pin 113 can be moved from the second ring 111 toward the first ring 110 without being rotated. Therefore, when the press fitting section 143 is press-fitted into the inner circumferential surface of the through hole 121 of the second ring 111, there is no occurrence of dynamical friction due to rotation of the pin. As a consequence, compared with the construction in which the pin, while rotated with a torque applied to the pin, is moved from the second ring toward the first ring, interferences or tightening margins between the outer circumferential surface of the press fitting section 143 and the inner circumferential surface of the through hole 121 of the second ring 111, can be larger. Therefore, the rigidity in the junction portion of the pin 113 and the second ring 111 can be further increased, so that the rigidity of the retainer 105 against loads acting on the pins can be further increased.

According to the retainer 105 of the second embodiment, the pin 113 has the contact section 142. Therefore, compared with cases in which recess or cutout is formed in the pin to stop the pin from moving in the axial direction of the pin, no damage of the pin 13 occurs, while the screw thread section 140 can be tightened to the screw thread hole 122 with large torque, so that the engagement portion between the pin 113 and the first ring 110 can be increased in rigidity.

Also, according to the retainer 105 and roller 103 assembling method of the second embodiment, only by rotating the nut 112, the screw thread section 140 of the pin 113 can be screwed into the screw thread hole 122 of the nut 112 while the press fitting section 143 can be press-fitted into the through hole 121 of the second ring 111. Therefore, compared with a method including the step of press-fitting a bushing between the outer circumferential surface of the pin and the through hole of the second ring, the workability can be improved to a great extent, while the cycle time of production can be shortened, making it possible to improve the mass-productivity.

Also, according to the retainer 105 and roller 103 assembling method of the second embodiment, by virtue of its construction in which the nut 112 is to be rotated, the pin 113, without being rotated itself, can be moved from the second ring 111 toward the first ring 110. Therefore, when the press fitting section 143 is press-fitted into the inner circumferential surface of the through hole 121 of the second ring 111, there is no occurrence of dynamical friction due to rotation of the pin. Thus, compared with the construction in which the pin is rotated with a torque applied thereto and thereby the pin is moved from the second ring toward the first ring, interferences or tightening margins between the outer circumferential surface of the press fitting section 143 and the inner circumferential surface of the through hole 121 of the second ring 111 can be larger. Therefore, the rigidity in the junction portion of the pin 113 and the second ring 111 can be further increased, so that a retainer 105 of large rigidity can be assembled with simplicity.

Also, according to the tapered roller bearing of the second embodiment, the assembling workability of the retainer 105 can be improved, so that its mass-productivity can be enhanced. Further, high rigidity can be ensured in the retainer 105.

Also, although the anti-loosening portion is a welded portion in the retainer 105 of the second embodiment, it is also possible, for the retainer of the invention, that the anti-loosening portion is one portion of the pin on the other end portion side with respect to the press fitting section, which is deformed by crimping or that the anti-loosening portion may be a rod member (e.g., a small pin) struck in on the other end portion side with respect to the press fitting section.

Although the pin 113 has the contact section 142 in the retainer 105 of the second embodiment, recess or cutout may also be formed instead of the contact section formed in the pin in this invention.

Also, in the retainer 105 of the second embodiment, the through holes 121 of the second ring 111 each have the first cylindrical surface portion 130 and the second cylindrical surface portion 131 larger in inner diameter than the first cylindrical surface portion 130. However, the second cylindrical surface portion may be unprovided, and the through holes may be all of the same inner diameter.

Also, in the retainer 105 of the second embodiment, the press fitting section 143 and the screw thread section 140 are coupled with each other via a roughly columnar-shaped portion as shown in Fig. 4. However, the configuration of the portion between the press fitting section and the screw thread section may be formed into any configuration only if the portion, which is positioned within a region defined by an extension plane of the outer circumferential surface of the press fitting section, does not make contact with the through holes of the second ring during its passage through the through holes of the second ring. In addition, needless to say, the screw thread section is also positioned within the region defined by the extension plane of the outer circumferential surface of the press fitting section. Similarly, a portion of the pin closer to the screw thread section side than an end of the press fitting section may be formed into any configuration only if the portion does not make contact with the through holes of the first ring during its passage or insertion into the first through holes.

Further, although the rolling elements of the roller bearing are tapered rollers in the second embodiment, yet the rolling elements for the roller bearing in this invention may also be cylindrical rollers or spherical rollers. Besides, although the tapered rollers 103 are retained by the retainer 105 of the second embodiment, the retainer of this invention may also be used to retain cylindrical rollers or spherical rollers.

In the retainer 5 of the first embodiment, the screw thread section 40 of the pin 13 is screwed into the screw thread hole 20 of the first ring 10. In the retainer 105 of the second embodiment, the fitting section 141 of the pin 113 is accommodated in the through hole 120 of the first ring 110 while the screw thread section 140 of the pin 113 is screwed into the screw thread hole 122 of the nut 112. However, in this invention, it is also possible that a plurality of screw thread holes positioned so as to be spaced from each other in the circumferential direction of the first ring are formed in the first ring, where the screw thread section of the pin is screwed to both the screw thread hole of the first ring and the screw thread hole of the nut. In addition, in this case, it is needless to say that one axial end face of the nut is in contact with the other axial end face of the first ring opposite to the second ring side.

Embodiments of the invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A pin type retainer comprising:
a first ring;
a second ring which is positioned at a distance from the first ring in an axial direction of the first ring and which has a plurality of through holes circumferentially spaced from each other; and
a rod-like pin which is inserted into a through hole of a roller and which has a press fitting section and a screw thread section on its outer circumferential surface, wherein
an outer diameter of the press fitting section of the pin is larger than a maximum outer diameter of a portion of the pin on the screw thread section side with respect to the press fitting section,
a minimum inner diameter of the through hole of the second ring is larger than the maximum outer diameter of the portion of the pin on the screw thread section side with respect to the press fitting section,
the screw thread section of the pin is screwed and fixed to the first ring while the press fitting section of the pin is interference-fit to the through hole of the second ring, and
the retainer includes an anti-loosening portion for preventing the press fitting section of the pin from loosening out from the through hole of the second ring.

2. The pin type retainer as claimed in Claim 1, wherein
the first ring has a plurality of screw thread holes spaced from each other in a circumferential direction of the first ring, and
the screw thread section of the pin is screwed with the screw thread hole of the first ring.

3. The pin type retainer as claimed in Claim 1, wherein
the first ring has a plurality of through holes spaced from each other in the circumferential direction of the first ring,
the outer circumferential surface of the pin has a fitting section between the press fitting section and the screw thread section,
the pin type retainer further comprises nuts which are to be in contact with an axial end face of the first ring on one side opposite to a second ring side and which have screw thread holes communicating with the through holes of the first ring, and
the fitting section of the pin is clearance-fitted to the through hole of the first ring, while the screw thread section of the pin is screwed into the screw thread hole of the nut.

4. The pin type retainer as claimed in Claim 3, wherein
the pin has a stepped portion on one side of the fitting section opposite to the screw thread section side, and
the stepped portion of the pin is in contact with the second ring-side axial end face of the first ring.

5. A method of assembling a pin type retainer and rollers together, the method comprising the steps of: preparing
a first ring,
a second ring having through holes,
rollers having through holes, and
a rod-like pin which has a screw thread section and a press fitting section on its outer circumferential surface, wherein an outer diameter of the press fitting section is larger than a minimum inner diameter of the through holes of the second ring while a maximum outer diameter of a portion of the pin on the screw thread section side with respect to the press fitting section is smaller than the minimum inner diameter of the through holes of the second ring; and
inserting a screw thread section-side end portion of the pin through the through hole of the second ring and thereafter through the through hole of the roller,
subsequently, while a relative position of the second ring to the first ring is maintained at a preset relative position, fixing the screw thread section of the pin to the first ring by screwing, and moreover press-fitting the press fitting section into the through hole of the second ring.

6. The method of assembling a pin type retainer and rollers together as claimed in Claim 5, wherein
the first ring has screw thread holes,
the pin has a torque applying portion on one side of the press fitting section opposite to the screw thread section side,
the screw thread section-side end portion of the pin is inserted through the through hole of the second ring and thereafter through the through hole of the roller, and subsequently the screw thread section-side end of the pin is inserted into an opening of the screw thread hole of the first ring, and
subsequently, while a relative position of the second ring to the first ring is maintained at a preset relative position, a torque is applied to the torque applying portion to make the pin rotated, by which the screw thread section is screwed to the screw thread hole, and moreover the press fitting section is press-fitted into the through hole.

7. The method of assembling a pin type retainer and rollers together as claimed in Claim 5, wherein
the first ring has through holes;
the pin has a fitting section between the screw thread section and the press fitting section,
a maximum outer diameter of a portion of the pin ranging from a press fitting section-side end of the fitting section to the screw thread section is smaller than a minimum inner diameter of the through holes of the first ring, and
the method further comprises:
preparing nuts having screw thread holes;
inserting a screw thread section-side end portion of the pin through the through hole of the second ring, then through the through hole of the roller, and thereafter through the through hole of the first ring, and subsequently inserting the screw thread section-side end of the pin into an opening of the screw thread hole of the nut; and
thereafter, while a relative position of the second ring to the first ring is maintained at a preset relative position, rotating the nut so that the pin is moved from the second ring toward the first ring, by which the screw thread section of the pin is screwed with the screw thread hole of the nut and moreover the press fitting section of the pin is press-fitted into the through hole of the second ring.

8. A roller bearing comprising:
an outer ring;
an inner ring;
a plurality of rollers positioned between the outer ring and the inner ring; and
the pin type retainer for retaining the plurality of rollers as defined in any one of Claims 1 to 4.
